# EUROPEAN PATENT APPLICATION

(11) **EP 4 191 542 A1**
(43) Date of publication of application: **07.06.2023**
(21) Application number: 20947129.1
(22) Date of filing: 27.07.2020
(51) Int. Cl.: G06T 19/00

(54) **INFORMATION PROCESSING DEVICE, 3D MODEL GENERATION METHOD, AND PROGRAM**

(71) Applicant: VRC Inc., Hachioji-shi, Tokyo 192-0046 (JP)
(72) Inventor: XIE, Yingdi, Hachioji-shi, Tokyo 192-0046 (JP); ZHANG, Yanpeng, Hachioji-shi, Tokyo 192-0046 (JP)
(74) Representative: Haseltine Lake Kempner LLP
(86) International application number: PCT/JP2020/028759
(87) International publication number: WO 2022/024199

(57) **Abstract**

An information processing device includes a first photographing means that photographs a whole-body of a subject in a predetermined pose, a second photographing means that photographs a face of the subject, a first obtaining means that obtains a whole-body 3D model of the subject generated by using an image captured by the first photographing means, a second obtaining means that obtains a head 3D model of the subject generated by using an image captured by the second photographing means, and a synthesizing means that synthesizes a head 3D model with a head of a whole-body 3D model.

## Description

### TECHNICAL FIELD

The present disclosure relates to a technique for generating a 3D model or 3D model data.

### RELATE ART

Known in the art are devices for generating 3D modelling data for representing a 3D model of a subject. For example, Patent Document 1 discloses a 3D scanner that includes a frame in which a plurality of cameras is installed for photographing a subject while rotating around the subject to generate 3D model data.

### PRIOR ART

### PATENT DOCUMENT

Patent Document 1: JP 2018-044812A

### SUMMARY

### PROBLEM TO BE SOLVED

The 3D scanner in Patent Document 1 is large and heavy. For some applications, a compact and lightweight device is required. The present disclosure provides a technique for generating 3D model data using a compact and lightweight computer device.

### SOLUTION

According to one aspect of the disclosure, there is provided an information processing device including: a first photographing means for photographing a whole-body of a subject in a predetermined pose; a second photographing means for photographing a face of the subject; a first obtaining means for obtaining a whole-body 3D model of the subject, the whole-body 3D model generated by using images captured by the first photographing means; a second obtaining means for obtaining a head 3D model of the subject, the head 3D model generated by using an image captured by the second photographing means; and a synthesizing means for synthesizing the head 3D model with a head of the whole-body 3D model.

The first photographing means may capture a plurality of images while rotating in one direction the whole-body of the subject in the predetermined pose, and the first obtaining means may obtain the whole-body 3D model of the subject generated by using the plurality of images captured by the first photographing means.

The first photographing means may detect a pose of the subject, and when it is detected that the pose of the subject deviates from the predetermined pose, the first photographing means may alert the subject.

The second obtaining means may obtain the head 3D model of the subject generated by using a single image captured by the first photographing means.

The first obtaining means may obtain the whole-body 3D model of the subject generated using a machine-learning model that learns by using training data, the training data including two dimensional images and 3D models, the two dimensional images being of whole bodies without depth information of a plurality of persons in the predetermined pose, the 3D models being of the whole-body of the subject, the two dimensional images being provided to an input layer, the 3D models being provided to an output layer.

The first obtaining means may obtain the whole-body 3D model generated by using the machine-learning model that learns by using training data, the training data including pseudo images obtained by photographing a 3D model with a virtual camera in a virtual space, the training data being provided to the input layer.

The second obtaining means may obtain the head 3D model of the subject generated using the machine-learning model that learns using the training data including, for a plurality of persons, two dimensional images of faces without depth information and head 3D models, the two dimensional images being provided to the input layer and the head 3D models being provided to the output layer.

According to another aspect of the disclosure, there is provided an 3D model generating method including: photographing, by a portable terminal, a whole-body of a subject in a predetermined pose; photographing, by the portable terminal, a face of the subject; obtaining, by the portable terminal, a whole-body 3D model of the subject, the whole-body 3D model generated by using images captured in the photographing step; obtaining, by the portable terminal, a head 3D model of the subject, the head 3D model generated by using an image captured in the photographing step; and synthesizing, by the portable terminal, the head 3D model with a head of the whole-body 3D model.

According to yet another aspect of the disclosure, there is provided an program for causing a computer to execute a process, the process including: photographing a whole-body of a subject in a predetermined pose; photographing a face of the subject; obtaining a whole-body 3D model of the subject, the whole-body 3D model generated by using images captured in the photographing step; obtaining a head 3D model of the subject, the head 3D model generated by using an image captured in the photographing step; and synthesizing the head 3D model with a head of the whole-body 3D model.

### ADVANTAGEOUS EFFECTS

According to the present disclosure, it is possible to generate 3D model data by using a compact and lightweight computer device.

### BRIEF DESCRIPTION OF THE DRAWINGS

FIG. 1 is a diagram showing an outline of a 3D data system 1 according to an embodiment.
FIG. 2 shows an exemplary functional configuration of 3D data system 1.
FIG. 3 shows an exemplary hardware configuration of terminal device 30.
FIG. 4 shows an exemplary hardware configuration of server 10.
FIG. 5 shows a sequence chart illustrating an operation of 3D data system 1.
FIG. 6 schematically shows whole body photography.
FIG. 7 schematically shows photography of a face image.

### DESCRIPTION OF REFERENCE NUMERALS

1...3D data system, 10...server, 11... storage means, 12...learning means, 13...receiving means, 14... generating means, 15... control means, 17... control means, 20... server, 30...terminal device, 31...storage means, 33...photographing means, 34...obtaining means, 35...obtaining means, 36...synthesizing means, 37...control means, 101...CPU, 102...memory, 103...storage, 104...communication IF, 111...machine-learning model, 112...training data, 114...training data, 301...CPU, 302...memory, 303... storage, 304...communication IF, 305...display, 306...input device, 307...camera.

### DETAILED DESCRIPTION

### 1. Configuration

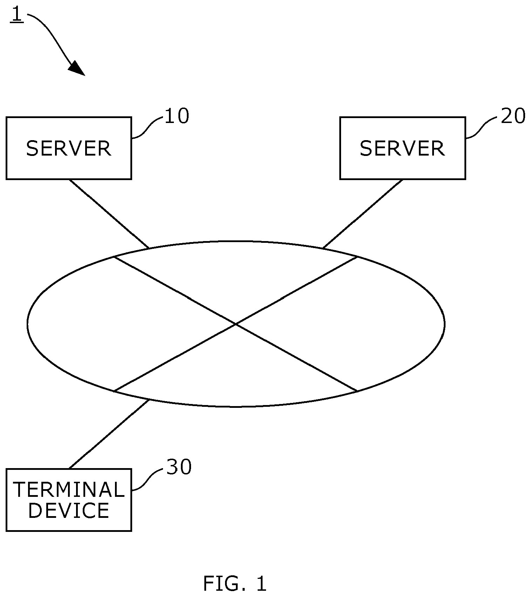

FIG. 1 shows an outline of 3D data system 1 according to an embodiment. 3D data system 1 generates a 3D model of a subject, i.e., an object. In this example, the subject is a living being such as a human or an animal. The 3D model constitutes data for expressing an object in three dimensions in a virtual space on a computer.

In this embodiment, the 3D model is generated using a general-purpose computing device. More specifically, for example, a smart phone is used rather than a dedicated 3D scanner. Compared to a dedicated 3D scanner, cameras of general purpose computing devices are generally inferior in performance. Therefore, in this embodiment, a face is photographed separately from a whole-body of the subject. Using images of the face, a 3D model of the face is created separately from a whole-body 3D model, and the 3D model of the face and the 3D model of the whole-body are then synthesized (or combined). It is of note here that the term "3D model data" refers to data representing a 3D model, and the terms "generating a 3D model" and "generating 3D model data" have substantially the same meaning.

3D data system 1 includes server 10, server 20, and terminal device 30. Terminal device 30 captures an image of a subject. Server 10 generates 3D model data by using images captured by terminal device 30. Server 20 provides applications that utilize 3D modelling data. Server 10, server 20, and terminal device 30 are connected via a network such as the Internet.

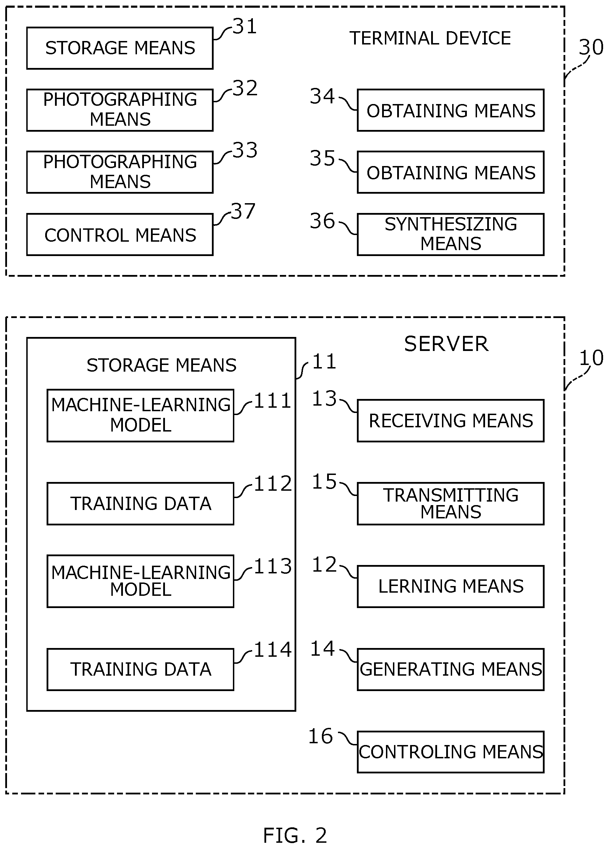

FIG. 2 shows an exemplary functional configuration of 3D data system 1. In 3D data system 1, terminal device 30 includes storage means 31, photographing means 32, photographing means 33, obtaining means 34, obtaining means 35, synthesizing means 36, and control means 37. Server 10 includes storage means 11, learning means 12, receiving means 13, control means 17, and transmission means 15.

Storage means 31 stores various data. Photographing means 32 captures images of a whole-body of a subject in a predetermined adopted pose. Photographing means 33 captures images of the face of the subject. Obtaining means 34 obtains 3D data of the whole-body of the subject. The 3D data is generated by using the images captured by photographing means 33. Second obtaining means 35 obtains 3D data of the head of the subject, which is generated by using the images captured by photographing means 33. Synthesizing means 36 synthesizes head 3D model with the head of the whole body 3D model. Controlling means 37 performs various controls.

Storage means 11 stores various data. In this example, the data stored in the storage means 11 includes machine-learning model 111, training data 112, machine-learning model 113, and training data 114. Machine-learning model 111 is a model in which machine-learning is performed by using training data 112. Training data 112 includes whole-body images of subjects and 3D model data of the whole-body of the subjects. The whole-body image includes a plurality of images obtained by photographing a subject in a specific pose from a plurality of different angles. The images do not include depth information (as will be described below). Machine-learning model 113 is a model in which machine-learning is performed by using training data 114. Training data 114 includes facial images (without depth information) of the subjects and 3D model data of the head of the subjects.

3D model data included in training data 112 and training data 114 is generated by applying a predetermined algorithm to images obtained by photographing each of a plurality of different subjects. At least a part of training data 112 and training data 114 may include depth information obtained when an image of a subject is captured. The corresponding 3D modelling data is then generated using the images of the object and the depth data. 3D model data included in training data 112 and training data 114 is generated by, for example, a dedicated 3D scanner.

Learning means 12 causes machine-learning model 111 and machine-learning model 113 to perform machine-learning. Learning means 12 provides a two-dimensional image of the whole-body to the input layer and 3D model data of the whole-body to the output layer as training data, in machine-learning model 111. Further, learning means 12 provides the two-dimensional image of the face to the input layer, and provides the 3D modeling data of the head to the output layer as training data.

Receiving means 13 receives a 3D model generation request from terminal device 30. Generating means 14 generates whole body 3D model data and head 3D model data by using images provided from terminal device 30. Transmitting means 15 transmits the generated 3D model data to terminal device 30. Controlling means 16 performs various controls.

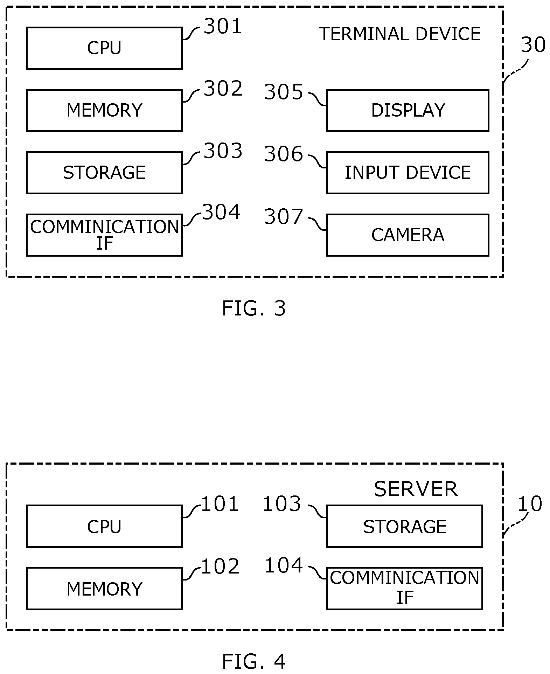

FIG. 3 shows an exemplary hardware configuration of terminal device 30. Terminal device 30 is a computer device or an information processing device including CPU 301, memory 302, storage 303, communication IF 304, display 305, input device 306, and camera 307, and is for example, a smart phone, a tablet terminal, or a personal computer. Terminal device 30 is preferably a portable terminal. When the terminal device 30 is a personal computer, terminal device 30 is preferably a laptop personal computer. Further, when the terminal device 30 is a desktop personal computer, camera 307 is preferably a portable external camera.

CPU 301 is a processing device that performs various kinds of processing in accordance with a program. Memory 302 is a main storage device that functions as a work area when CPU 301 executes programs, and includes, for example, a ROM and a RAM. Storage 303 is an auxiliary storage device that stores various types of data/programs, and includes, for example, an SSD (Solid State Drive) or an HDD (Hard Disk Drive). Communication IF 304 is a device that communicates with other devices in accordance with a predetermined standard, and includes, for example, a modem chip for mobile communication (LTE or the like) and short-range radio communication (Wi-Fi, Bluetooth, or the like). Display 305 is a display device for displaying information, and includes, for example, an LCD or an organic EL display. Input device 306 is a device for inputting information to terminal device 30, and includes, for example, at least one of a touch screen, a keypad, a keyboard, a mouse, and a microphone. Camera 307 is a device that captures a subject and outputs image data, and includes, for example, optical lenses and CCD sensors. When terminal device 30 is a smartphone or a tablet terminal, camera 307 includes two cameras, an in-camera and an out-camera. The in-camera is provided on the front surface of a housing, that is, on the same surface as display 305, and is often used for taking a selfie. The out-camera is a camera provided on the rear surface of the housing. Here, the in-camera and out-camera are collectively referred to as camera 307.

The program stored in storage 303 includes a program (hereinafter referred to as a "client application") that causes the computer device to function as terminal device 30 in 3D data system 1. When CPU 301 is executing the client program, at least one of storage 303 and memory 302 is an example of storage means 11. Camera 307 is an example of photographing means 32 and photographing means 33. CPU 301 is an example of obtaining means 34, obtaining means 35, synthesizing means 36, and control means 37.

FIG. 4 shows an exemplary hardware configuration of server 10. Server 10 is a computer device having CPU 101, memory 102, storage 103, and communication IF 104. CPU 101 is a processing device that performs various processing in accordance with a program. Memory 102 is a main storage device that functions as a work area when CPU 101 executes programs, and includes, for example, a ROM and a RAM. Storage 103 is an auxiliary storage device for storing various data and programs, and includes, for example, an SSD or an HDD. Communication IF 104 is a device that performs communication with another device in accordance with a predetermined standard, and includes, for example, an NIC (Network Interface Card).

In this embodiment, the program stored in storage 303 includes a program (hereinafter referred to as a "server program") that causes the computer device to function as server 10 in 3D data system 1. When CPU 101 is executing the server program, at least one of storage 103 and memory 102 is an example of storage means 11. Communication IF 104 is an example of receiving means 13 and transmitting means 15. CPU 101 is an example of learning means 12, generating means 14, and control means 16.

### 2. Operation

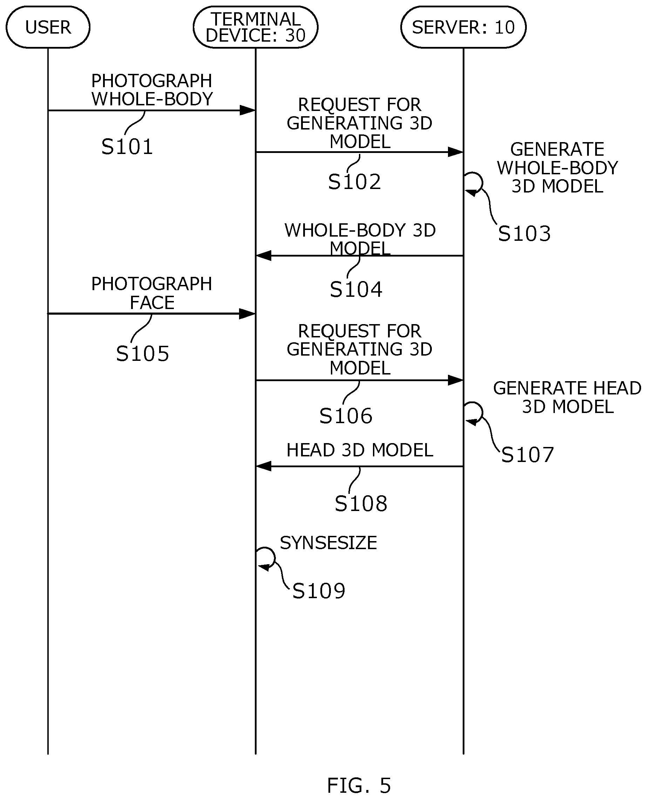

FIG. 5 shows a sequence chart illustrating the operation of 3D data system 1. In the following description, functional components such as storage means 31 are described as a subject of processing. This means that a hardware element such as CPU 301 that executes software such as a client program cooperates with other hardware elements to execute the software. Before the flow in FIG. 5 is started, the client application is installed in terminal device 30, and the client application is started.

At step S101, photographing means 32 captures an image of the whole-body of the user. At this time, photographing means 32 displays, on display 305, a screen for guiding a pose to be taken by the user during photographing. 3D data system 1 guides users to adopt a same pose during photographing. Details are as follows.

The user instructs 3D scanning in the client application. Upon receiving the instruction, the client application first captures a whole-body image of the subject. Details are as follows. Photographing means 32 activates camera 307. At this time, an in-camera or an out-camera may be activated. Photographing means 32 may switch a camera to be activated in accordance with an instruction from the user. Photographing means 32 guides the user to move to a position where the whole-body is displayed on the screen. The user leaves terminal device 30 at a position where the whole-body is seen in a fixed state with the terminal device placed on a stand, mounted on a wall, held by another person, or the like. Photographing means 32 detects a subject in an image output from camera 307. When it is detected that the whole-body is in a position where the whole-body fits on the screen, photographing means 32 alerts the user by outputting a sound or other notification.

When it is detected that the whole-body of the user is in a position where the whole-body of the user fits on the screen, photographing means 32 guides the user to adopt a predetermined pose, for example, an A pose or a T pose. The A pose refers to a pose in which both arms and both legs are each slightly apart. The T pose refers to a pose in which both arms are raised from the A pose to a position parallel to the ground. By causing a subject to adopt a particular pose in this way, it is possible to reduce dimensions using PCA (Principal Component Analysis) during machine-learning, and thus it is possible to reduce an amount of machine-learning.

Photographing means 32 guides the user's body in a predetermined direction, for example, a face in a direction toward camera 307, that is, toward terminal device 30. Photographing means 32 detects feature parts of a subject, for example, a face, a hand, and a leg in an image output from camera 307. When it is detected that a relative positional relationship between the feature parts detected in the image is in a predetermined state, in this example, a state in which the face faces the front and both arms and both legs are each slightly apart, photographing means 32 alerts the user by issuing a sound or other notification.

When it is detected that the user is in a predetermined orientation relative to terminal device 30, and is in a predetermined pose, photographing means 32 records an image output from camera 307 at predetermined time intervals. Photographing means 32 guides the user to rotate one rotation in one direction in situ (while the position of terminal device 30 is fixed), that is, to rotate one rotation about a rotation axis perpendicular to the ground and passing through the head of the user. At this time, photographing means 32 may detect the direction of the user from the image output from camera 307, and guide the user to rotate more slowly when a rotation speed is higher than a reference value, and guide the user to rotate more quickly when a rotation speed is lower than the reference value. Photographing means 32 may also detect a pose of the user while the user is rotating, and may alert or guide the user to adopt a predetermined pose when the pose of the user deviates from the predetermined pose.

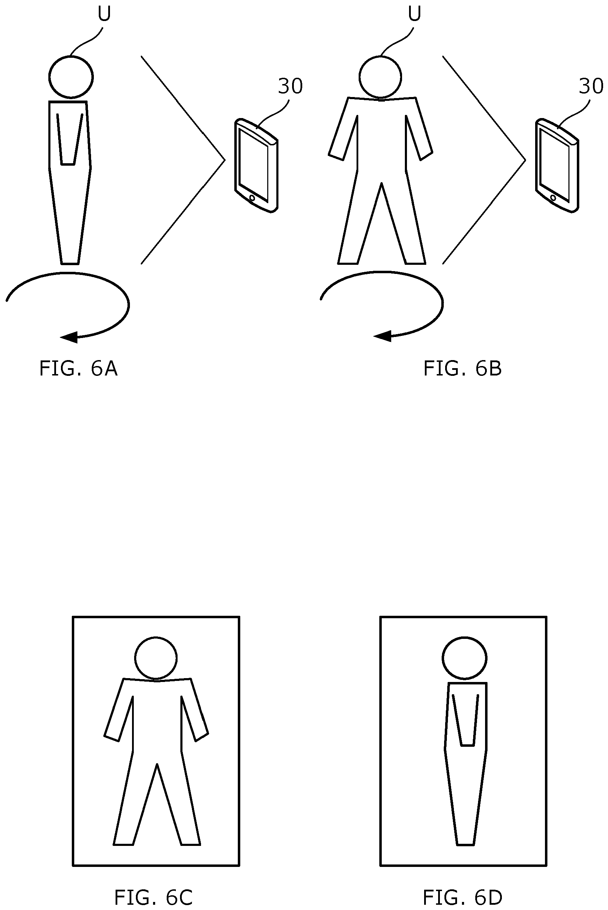

FIG. 6 is a schematic diagram illustrating whole-body imaging. FIG. 6A schematically illustrates a state in which the subject U faces a front side with respect to camera 307, and FIG. 6B schematically illustrates a state in which the subject U is rotated 90° clockwise from the state illustrated in FIG. 6A. In accordance with the guidance from photographing means 32, the subject U rotates by moving, for example, only one leg on a spot while maintaining the A-pose. FIG. 6C schematically illustrates an image captured in the state in FIG. 6A, and FIG. 6D schematically illustrates an image captured in the state in FIG. 6B. In FIG. 6C, the subject U faces front, and in FIG. 6D, the subject U faces left.

When it is detected in the image output from camera 307 that the user has rotated one rotation, photographing means 32 stops recording the image. In this way, a group of images captured by the user while changing an angle (i.e., rotation angle) with respect to the camera in a predetermined pose can be obtained. The image group does not include depth information. The depth information is information indicating a distance (or depth) from terminal device 30 to a plurality of points on a surface of the subject and information indicating a correspondence relationship between the distance (or depth) and a point on an image of the subject. Photographing means 32 records the group of images in storage means 31.

Referring again to FIG. 5, when the whole-body images are captured, obtaining means 34 transmits to server 10 (at step S102) a generation request to generate whole-body 3D model. The generation request includes a whole-body image group and user ID captured by photographing means 32. The user ID is specified by, for example, a process of logging into the client application.

Upon receiving a request to generate a whole-body 3D model from terminal device 30, generating means 14 of server 10 generates (at step S103) a whole-body 3D model. In this embodiment, generating means 14 generates a whole-body 3D model by using machine-learning model 111. Specifically, generating means 14 inputs the image group included in the generation request to machine-learning model 111. When the images are input machine-learning model 111 outputs whole-body 3D model data. Transmitting means 15 transmits (at step S104) the whole-body 3D model data generated by the generating unit 14 to terminal device 30 which is the requester of the generation request.

Upon completion of the whole-body image capture, the client application captures (at step S105) a facial image of the subject. Details are as follows. Photographing means 33 activates camera 307. In this case, the in-camera is activated. Photographing means 33 guides the user so that the face is (in a positional relationship) within a predetermined range of the screen. The user adjusts the position by holding terminal device 30 with his or her hand. At this time, since the image output from camera 307 is displayed on display 305, the user is able to adjust the position of terminal device 30 while viewing the screen. Photographing means 33 displays a shutter button on display 305. When the user presses the shutter button, photographing means 33 records in storage means 31 the image output from camera 307. A single-facial image instead of a whole-body image can be used. Like the whole-body image, the facial image does not include depth information.

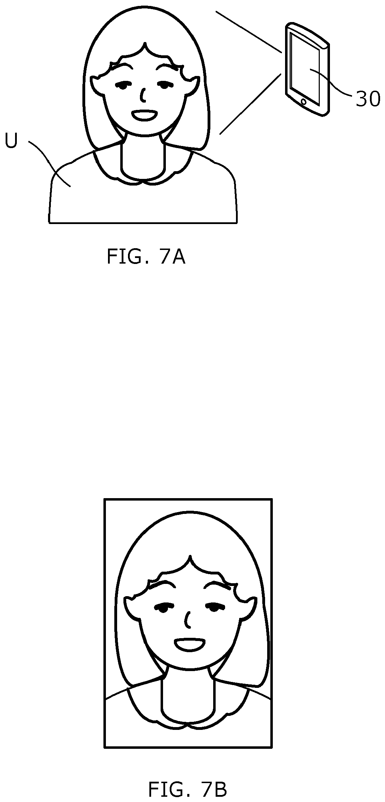

FIG. 7 is a schematic diagram illustrating photographing of a face image. FIG. 7A schematically illustrates a state in which the subject captures his/her face as a selfie in accordance with the guidance of the capturing unit 33. FIG. 7B is a diagram exemplifying an image captured in FIG. 7A. In this image, the face of the subject U is in full view from the front.

Referring again to FIG. 5, when capture of facial images is complete, obtaining means 35 transmits to server 1 (at step S106) a generation request to generate a head 3D model. The generation request includes facial images and user ID captured by photographing means 33.

Upon receiving a request to generate a head 3D model from terminal device 30, generating means 14 of server 10 generates (at step S107) a whole-body 3D model. In this embodiment, generating means 14 generates a head 3D model using machine-learning model 113. Specifically, generating means 14 inputs the face image included in the generation request to machine-learning model 113. When face images are input, machine-learning model 113 outputs whole-body 3D model data. Transmitting means 15 transmits (at step S108) 3D model data of the head generated by the generating unit 14 to terminal device 30 which is the requester of the generation request.

At step S109, the synthesizer 36 synthesizes head 3D model into whole-body 3D model. Details are as follows. The synthesizer 36 identifies the head in the whole-body 3D model. The synthesizer 36 replaces the head identified in the whole-body 3D model with a head 3D model. At this time, synthesizing means 36 detects feature parts (for example, an eye, a nose, and a mouth) in a face included in the whole-body 3D model, and adjusts the size and the position of head 3D model so that the feature parts coincide with each other for synthesis of the whole-body 3D model. Synthesizing means 36 records the generated 3D modelling data in storage means 31.

Although cameras of general-purpose computing devices are inferior in performance compared to dedicated 3D scanners, in many cases, the most important part of a 3D model is the face. In the present embodiment, since a close-up photograph is used separately from the whole-body, a higher-definition 3D model can be obtained as compared with a 3D model generated from the whole-body images.

### 3. Modification

The present invention is not limited to the embodiment described above, and various modifications can be envisaged. Some variations of a modification will be described below. Two or more of the items described in the following modifications may be combined.

Training data 112 and training data 114 are not limited to those illustrated in the embodiment. For example, the learner 12 generates a pseudo two-dimensional image (hereinafter referred to as a "pseudo image") obtained by capturing a 3D model with a virtual camera in a virtual space using 3D model data generated by dedicated 3D scanners for a plurality of different subjects. The pseudo image includes, for example, an image captured by a virtual camera at various rotational angles while rotating 3D model about a rotational axis that is parallel to the ground and that passes through the head. By using the pseudo image, it is possible to reduce a time and effort required for preparing the training data.

An order in which the whole-body image and the facial image are captured and an order in which the 3D model is generated from the image are not limited to those exemplified in the embodiment. For example, photographing means 33 may first capture a facial image and may then capture a whole-body image, and obtaining means 34 and obtaining means 35 may request server 10 to generate a 3D model after capture of both images.

The subject for generating the 3D model is not limited to server 10. For example, terminal device 30 instead of server 10 may have a function that corresponds to generating means 14. In this case, terminal device 30 downloads the learned model in advance, that is, machine-learning model 111 and machine-learning model 113. Terminal device 30 generates 3D model data using machine-learning model 111 and machine-learning model 113.

In the embodiment, generating means 14 generates the whole-body 3D model data from the plurality of whole-body images captured at different angles. However, generating means 14 may generate the whole-body 3D model data from only one whole-body image in the same manner as the facial image. Here, training data 112 includes only one whole-body image and corresponding 3D model data, and machine-learning model 111 learns using training data 112.

In the embodiment, generating means 14 generates 3D model data of the head from only one facial image, but generating means 14 may generate 3D model data of the head from groups of images of the plurality of heads captured at different angles while the subject rotates in situ, as in the case of the whole-body image. In this case, training data 114 includes images of a plurality of heads captured at different angles, and machine-learning model 113 learns using the images.

The hardware configurations of server 10 and terminal device 30 are not limited to those illustrated in the embodiments. Server 10 and the terminal devices 30 may each have any hardware configuration as long as the configuration enables required functions to be implemented.

The program executed by CPU 101 or the like may be downloaded via a network such as the Internet or may be provided while being recorded on a recording medium such as a CD-ROM.

## Claims

1. An information processing device comprising:
a first photographing means for photographing a whole-body of a subject in a predetermined pose;
a second photographing means for photographing a face of the subject;
a first obtaining means for obtaining a whole-body 3D model of the subject, the whole-body 3D model generated by using images captured by the first photographing means;
a second obtaining means for obtaining a head 3D model of the subject, the head 3D model generated by using an image captured by the second photographing means; and
a synthesizing means for synthesizing the head 3D model with a head of the whole-body 3D model.

2. The information processing device according to claim 1, wherein
the first photographing means captures a plurality of images while rotating in one direction the whole-body of the subject in the predetermined pose, and
the first obtaining means obtains the whole-body 3D model of the subject generated by using the plurality of images captured by the first photographing means.

3. The information processing device according to claim 2, wherein
the first photographing means detects a pose of the subject, and
when it is detected that the pose of the subject deviates from the predetermined pose, the first photographing means alerts the subject.

4. The information processing device according to any one of claims 1 to 3, wherein
the second obtaining means obtains the head 3D model of the subject generated by using a single image captured by the first photographing means.

5. The information processing device according to any one of claims 1 to 4, wherein
the first obtaining means obtains the whole-body 3D model of the subject generated using a machine-learning model that learns by using training data, the training data including two dimensional images and 3D models, the two dimensional images being of whole bodies without depth information of a plurality of persons in the predetermined pose, the 3D models being of the whole-body of the subject, the two dimensional images being provided to an input layer, the 3D models being provided to an output layer.

6. The information processing device according to claim 5, wherein
the first obtaining means obtains the whole-body 3D model generated by using the machine-learning model that learns by using training data, the training data including pseudo images obtained by photographing a 3D model with a virtual camera in a virtual space, the training data being provided to the input layer.

7. The information processing device according to any one of claims 1 to 6, wherein
the second obtaining means obtains the head 3D model of the subject generated using the machine-learning model that learns using the training data including, for a plurality of persons, two dimensional images of faces without depth information and head 3D models, the two dimensional images being provided to the input layer and the head 3D models being provided to the output layer.

8. A 3D model generating method comprising:
photographing, by a portable terminal, a whole-body of a subject in a predetermined pose;
photographing, by the portable terminal, a face of the subject;
obtaining, by the portable terminal, a whole-body 3D model of the subject, the whole-body 3D model generated by using images captured in the photographing step;
obtaining, by the portable terminal, a head 3D model of the subject, the head 3D model generated by using an image captured in the photographing step; and
synthesizing, by the portable terminal, the head 3D model with a head of the whole-body 3D model.

9. A program for causing a computer to execute a process, the process comprising:
photographing a whole-body of a subject in a predetermined pose;
photographing a face of the subject;
obtaining a whole-body 3D model of the subject, the whole-body 3D model generated by using images captured in the photographing step;
obtaining a head 3D model of the subject, the head 3D model generated by using an image captured in the photographing step; and
synthesizing the head 3D model with a head of the whole-body 3D model.
